# EUROPÄISCHE PATENTANMELDUNG

(11) **EP 1 782 964 A1**
(43) Veröffentlichungstag der Anmeldung: **09.05.2007**
(21) Anmeldenummer: 06021853.4
(22) Anmeldetag: 18.10.2006
(51) Int. Cl.: B60B 1/04, B60B 21/06

(54) **Öse für eine Hohlkammerfelge**

(30) Priorität: 18.10.2005 DE 102005049764
(71) Anmelder: Schürmann Fahrradteile GmbH & Co. KG, 33818 Leopoldshöhe-Greste (DE)
(72) Erfinder: Krauspe, Mark, 33719 Bielefeld (DE)
(74) Vertreter: Zinsinger, Norbert

(57) **Zusammenfassung**

Es wird eine Öse (10) zur Verstärkung eines im Außengurt (28) einer Hohlkammerfelge (12) vorgesehenen Speichenloches (34) und zur Verbesserung des Nippelsitzes einer entsprechenden Speiche (26) beschrieben. Die Öse (10) ist einteilig mit einem Speichenlochabschnitt (14) und einem Topfabschnitt (16) ausgebildet, der sich axial an den Speichenlochabschnitt (14) anschließt. Der Speichenlochabschnitt (14) erstreckt sich durch das entsprechende Speichenloch (34) und der Topfabschnitt (16) erstreckt sich durch ein mit dem Speichenloch (34) axial fluchtendes Loch (36) im Innengurt (30) der Hohlkammerfelge (12) und liegt mit einem Flansch (22) am Innengurt (30) an.

## Beschreibung

Die Erfindung betrifft eine Öse zur Verstärkung eines im Außengurt einer Hohlkammerfelge vorgesehenen Speichenloches und zur Verbesserung des Nippelsitzes einer entsprechenden Speiche.

Bei hochwertigen Fahrrad-Hohlkammerfolgen dienen solche Ösen, die in die Speichenlöcher eingesetzt werden, zur Verstärkung der im Außengurt der Hohlkammerfelge vorgesehenen Speichenlöcher und gleichzeitig zur Verbesserung des Nippelsitzes der Speichen des jeweiligen Rades.

Bei den bekannten Ösen wird zwischen sogenannten Einfachösen und Doppelösen unterschieden. Die Einfachösen dienen lediglich zur Verstärkung der Speichenlöcher. Die Doppelösen, die nur bei Hohlkammerfelgen zur Anwendung gelangen, erstrecken sich vom Außengurt bis zum Innengurt der jeweiligen Hohlkammerfelge, d.h. bis in das Felgenbett der Hohlkammerfelge. Die bekannten Doppelösen bestehen aus einer Einfachöse, die mit einer sogenannten Topföse kombiniert wird. Diese bekannten Ösen bestehen also aus zwei Teilen, Erst die mechanische Verbindung dieser beiden Teile ergibt dann die jeweilige Doppelöse.

Die Einfachösen und die Topfösen bestehen aus einem Metall, insbesondere Stahl. Bei solchen Stahlösen ist jedoch eine Korrosion nicht auszuschließen. Außerdem sind mechanische Verformungen dieser Stahlösen bei ihrer Montage nicht zuverlässig ausschließbar, aus welchen Verformungen des entsprechenden Speichenloches resultieren können.

In Kenntnis dieser Gegebenheiten liegt der Erfindung die Aufgabe zugrunde, eine Öse der eingangs genannten Art zu schaffen, die einfach und preisgünstig herstellbar ist, wobei mechanische Verformungen bei ihrer Montage vermieden werden.

Diese Aufgabe wird bei einer Öse der eingangs genannten Art erfindungsgemäß dadurch gelöst, dass sie einteilig mit einem Speichenlochabschnitt und einem axial an den Speichenlochabschnitt anschließenden Topfabschnitt ausgebildet ist, wobei sich der Speichenlochabschnitt durch das entsprechende Speichenloch und der Topfabschnitt sich durch ein mit dem Speichenloch axial fluchtendes Loch im Innengurt der Hohlkammerfelge erstreckt und mit einem Flansch am Innengurt anliegt.

Die erfindungsgemäße Öse ähnelt in ihrer äußeren Form einer zweiteiligen Doppelöse, bestehend aus einer Einfachöse und einer Topföse. Durch die einteilige Ausbildung der erfindungsgemäßen Öse ergibt sich der Vorteil, dass der Manipulationsaufwand, wie er beim Zusammenbau einer Einfachöse mit einer Topföse gegeben ist, vermieden wird. Ein ganz erheblicher Vorteil der erfindungsgemäßen Öse besteht auch darin, dass Verformungen der Speichenlöcher der Hohlkammerfelge vermieden werden.

Als zweckmäßig hat es sich erwiesen, wenn die erfindungsgemäße Öse außenseitig eine am Außengurt innen anliegende umlaufende Ringfläche aufweist. Die Ringfläche weist von dem Flansch der Öse einen axialen Abstand auf, der dem radialen Abstand zwischen dem Außengurt und dem Innengurt der Hohlkammerfelge entspricht.

Die erfindungsgemäße Öse weist innenseitig vorzugsweise eine sich verjüngende ringförmige Nippelsitzfläche für den Nippelkopf des Nippels der entsprechenden Speiche auf. Die ringförmige Nippelsitzfläche ist einfach an die Form des Nippelkopfes des Nippels der Speiche anpassbar, so dass die unterschiedlichsten Modellvarianten problemlos realisierbar sind.

Als vorteilhaft hat es sich erwiesen, wenn der Speichenlochabschnitt der erfindungsgemäßen Öse einen an den lichten Durchmesser des Speichenloches angepassten Außendurchmesser und einen lichten Innendurchmesser aufweist, der an den Außendurchmesser eines an den Nippelkopf anschließenden Durchsteckabschnitt des Nippels angepasst ist. Durch eine solche Ausbildung ist eine Verbesserung des Nippelsitzes bzw. eine exakte Positionierung des Nippels und somit der entsprechenden Speiche möglich.

Dem selben Zwecke ist es dienlich, wenn der Topfabschnitt einen lichten Innendurchmesser aufweist, der an die Umfangsabmessung des Nippelkopfes des Nippels der Speiche angepasst ist.

Der am Innengurt anliegende Flansch des Topfabschnittes der erfindungsgemäßen Öse ist vorzugsweise mit zwei sich diametral gegenüberliegenden, zueinander parallelen Abflachungen ausgebildet. Die beiden Abflachungen besitzen voneinander einen Abstand, der an die lichte Weite des Felgenbettes der Hohlkammerfelge angepasst ist.

Die erfindungsgemäße Öse besteht vorzugsweise aus einem verschleißfesten Kunststoffmaterial, so dass sie in jeder beliebigen Farbe einfach herstellbar ist, wobei auch eine Korrosionsgefahr ausgeschlossen wird.

Weitere Einzelheiten, Merkmale und Vorteile ergeben sich aus der nachfolgenden Beschreibung eines in der Zeichnung dargestellten Ausführungsbeispieles der erfindungsgemäßen Öse sowie eines Anwendungsbeispieles für eine solche Öse.

Es zeigen.
- Figur 1: eine Draufsicht auf die Öse,
- Figur 2: eine Ansicht der Öse in Blickrichtung des Pfeiles II in Figur 1,
- Figur 3: eine Ansicht der Öse in Blickrichtung des Pfeiles III in Figur 1, und
- Figur 4: in einer Schnittdarstellung eine Hohlkammerfelge mit einer Öse gemäß den Figuren 1 bis 3 in Kombination mit einer abgeschnitten gezeichneten Speiche.

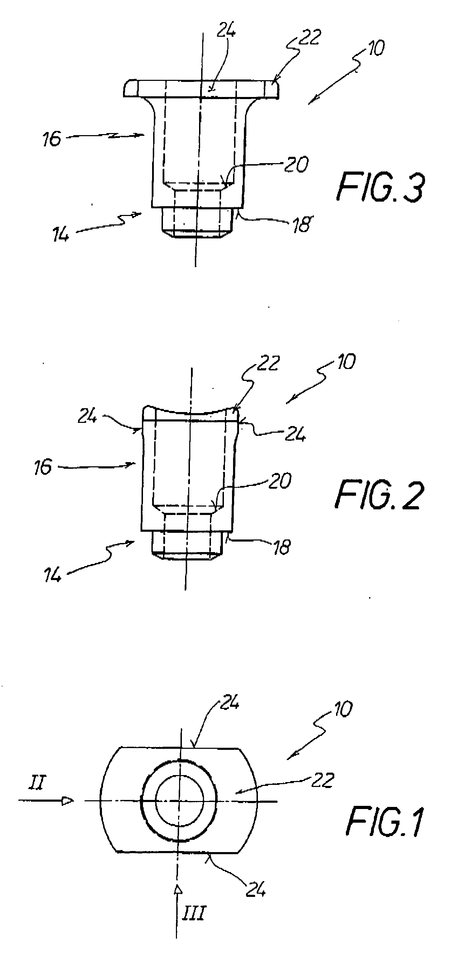

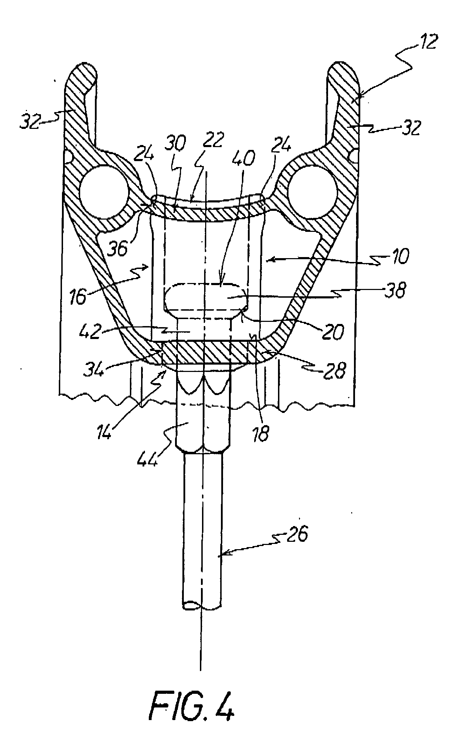

Die Figuren 1 bis 3 zeigen eine Ausbildung der Öse 10 für eine Hohlkammerfelge 12, wie sie in Figur 4 dargestellt ist.

Die Öse 10 ist einteilig mit einem Speichenlochabschnitt 14 und einem axial an den Speichenlochabschnitt 14 anschließenden Topfabschnitt 16 ausgebildet. Die Öse 10 ist außenseitig mit einer umlaufenden Ringfläche 18 und innenseitig mit einer sich verjüngenden ringförmigen Nippelsitzfläche 20 ausgebildet,

An dem vom Speichenlochabschnitt 14 abgewandten Ende ist die Öse 10 mit einem Flansch 22 ausgebildet. Der Flansch 22 ist mit zwei sich diametral gegenüberliegenden und zueinander parallelen Abflachungen 24 ausgebildet.

Figur 4 verdeutlicht in einer Schnittdarstellung eine Hohlkammerfelge 12 mit einer Öse 10 und einer abgeschnitten gezeichneten Speiche 26 eines Rades für ein Fahrrad. Die Hohlkammerfelge 12 weist einen Außengurt 28 und einen Innengurt 30 auf. Durch den Innengurt 30 und zwei sich seitlich gegenüberliegende Seitenwangen 32 wird in an sich bekannter Weise ein Felgenbett der Hohlkammerfelge 12 bestimmt.

Die Öse 10 erstreckt sich mit ihrem Speichenlochabschnitt 14 durch ein im Außengurt 28 ausgebildetes Speichenloch 34. Der Topfabschnitt 16 der Öse 10 erstreckt sich durch ein mit dem Speichenloch 34 axial fluchtendes Loch 36 im Innengurt 30 der Hohlkammerfelge 12. Die Öse 10 liegt mit ihrem Flansch 22 am Innengurt 30 der Hohlkammerfelge 12 an. Die Ringfläche 18 der Öse 10 liegt innen am Außengurt 28 der Hohlkammerfelge 12 an.

Die sich verjüngende ringförmige Nippelsitzfläche 20 der Öse 10 dient zur Anlage des Nippelkopfes 38 des Nippels 40 der Speiche 26. An den Nippelkopf 38 schließt ein Durchsteckabschnitt 42 des Nippels 40 der Speiche 26 an. An den Durchsteckabschnitt 42 schließt ein Mehrkantabschnitt 44 an, der mit einer definierten Klauenweite eines Klauenschlüssels dimensioniert ist. Bei diesem Mehrkantabschnitt 44 handelt es sich beispielsweise um einen Vierkantabschnitt.

Der Speichenlochabschnitt 14 der Öse 10 weist einen an den lichten Durchmesser des Speichenloches 34 angepassten Außendurchmesser und einen lichten Innendurchmesser auf, der an den Außendurchmesser des Durchsteckabschnittes 42 des Nippels 40 der Speiche 26 angepasst ist. Der Topfabschnitt 16 der Öse 10 weist einen lichten Innendurchmesser auf, der an die Umfangsabmessung des Nippelkopfes 38 des Nippels 40 der Speiche 26 angepasst ist.

## Patentansprüche

1. Öse zur Verstärkung eines im Außengurt (28) einer Hohlkammerfelge (12) vorgesehenen Speichenloches (34) und zur Verbesserung des Nippelsitzes einer entsprechenden Speiche (26),
**dadurch gekennzeichnet,**
**dass** die Öse (10) einteilig mit einem Speichenlochabschnitt (14) und einem axial an den Speichenlochabschnitt (14) anschließenden Topfabschnitt (16) ausgebildet ist, wobei sich der Speichenlochabschnitt (14) durch das entsprechende Speichenloch (34) und der Topfabschnitt (16) sich durch ein mit dem Speichenloch (34) axial fluchtendes Loch (36) im Innengurt (30) der Hohlkammerfelge (12) erstreckt und mit einem Flansch (22) am Innengurt (30) anliegt.

2. Öse nach Anspruch 1,
**dadurch gekennzeichnet,**
**dass** die Öse (10) außenseitig eine am Außengurt (28) innen anliegende umlaufende Ringfläche (18) aufweist.

3. Öse nach Anspruch 1,
**dadurch gekennzeichnet,**
**dass** die Öse (10) innenseitig eine sich verjüngende ringförmige Nippelsitzfläche (20) für den Nippelkopf (38) des Nippels (40) der Speiche (26) aufweist.

4. Öse nach Anspruch 1,
**dadurch gekennzeichnet,**
**dass** der Speichenlochabschnitt (14) einen an den lichten Durchmesser des Speichenloches (34) angepassten Außendurchmesser und einen lichten Innendurchmesser aufweist, der an den Außendurchmesser eines an den Nippelkopf (38) anschließenden Durchsteckabschnitt (42) des Nippels angepasst ist.

5. Öse nach Anspruch 1,
**dadurch gekennzeichnet,**
**dass** der Topfabschnitt (16) einen lichten Innendurchmesser aufweist, der an die Umfangsabmessung des Nippelkopfes (38) des Nippels (40) der Speiche (26) angepasst ist.

6. Öse nach Anspruch 1,
**dadurch gekennzeichnet,**
**dass** der am Innengurt (30) anliegende Flansch (22) des Topfabschnittes (16) der Öse (10) zwei sich diametral gegenüberliegende, zueinander parallele Abflachungen (24) aufweist.

7. Öse nach einem der vorhergehenden Ansprüche,
**dadurch gekennzeichnet,**
**dass** die Öse (10) aus einem Kunststoffmaterial besteht.
